# EUROPEAN PATENT SPECIFICATION

(11) **EP 2 568 407 B1**
(45) Date of publication and mention of the grant of the patent: **25.10.2017**
(21) Application number: 12183713.2
(22) Date of filing: 10.09.2012
(51) Int. Cl.: G06F 21/74, G06F 13/36

(54) **Method and system for communicating with and programming a secure element**
Verfahren und System zur Kommunikation mit einem sicheren Element und zu seiner Steuerung
Procédé et système permettant de communiquer et programmer un élément sécurisé

(30) Priority: 09.09.2011 US 201161532981 P
(43) Date of publication of application: 13.03.2013
(73) Proprietor: ASSA ABLOY AB, 107 23 Stockholm (SE)
(72) Inventor: Milbrandt, Ryan, Lakewood, CO Colorado 80228 (US)
(74) Representative: Grosfillier, Philippe

(56) References cited:
- EP-A1- 1 571 559
- EP-A1- 2 251 986
- US-A- 5 359 716
- US-A1- 2008 282 093

## Description

### CROSS REFERENCE TO RELATED APPLICATION

The present application claims the benefit of U.S. Provisional Application Serial No. 61/532,981, filed September 9, 2011.

### FIELD OF THE DISCLOSURE

The present disclosure is generally directed toward secure elements and mechanisms for programming and communicating with the same.

### BACKGROUND

Secure elements are becoming more popular as smartphones and/or Near Field Communications (NFC)-enabled devices proliferate. A secure element is any device or combination of devices that provides a trusted environment for storing sensitive data or applications. As used herein a secure element refers to any certified tamper-resistant platform, capable of securely hosting applications and their confidential and cryptographic data in accordance with rules and security requirements set forth by a trusted authority. Examples of secure elements include Universal Integrated Circuit Cards (UICCs), embedded secure elements, and removable secure elements. More specific examples of removable secure elements include Secure Access Modules (SAMs), micro Secure Digital (SD) cards, miniSD cards, Subscriber Identity Module (SIM) cards, and the like.

Historically, device manufacturers have designed their device to utilize removeable secure elements. This decreases the cost of the device to the end consumer because the secure element does not have to be included in the device by the manufacturer. More applications, however, are demanding that embedded secure elements be used in lieu of their removable alternatives.

When the secure element was removable, the secure element could be provisioned prior to utilization and then re-provisioned from a higher level interface by some type of network application. The programming of removable secure elements was not particularly problematic because the secure element could be plugged into different devices for programming before being inserted into a device in which it would be used. Embedded secure elements present an interesting problem because it would be significantly faster and more reliable to program this device without using an intermediate network.

EP2251986 discloses a near field communication device for providing a communication path between a processing unit of the device and an external device, wherein the device comprises the processing unit and a control unit coupled to the processing unit, wherein the control unit is adapted for establishing a communication between the control unit and the external device for providing a communication path between the processing unit and the external device via the control unit serving as a gateway.

### SUMMARY

It is, therefore, one aspect of the present disclosure to provide a device according to claim 6 and a method according to claim 1 that enable the in-situ programming of an embedded secure element. Other advantageous features can be found in the dependent claims. In some embodiments, the embedded or "on-board" secure element can be programmed, provisioned, etc. by a device other than the general purpose processor that uses the embedded secure element during operation. More specifically, the on-board secure element can be programmed with an off-board device, such as another secure element that is operating as a master.

Embodiments of the present disclosure allow an implementation that normally consists of a single master and two independent slave devices to be reconfigured such that one of the slave devices becomes the master. This slave-turned-master is configured to exchange communications directly with the other slave to the exclusion of the original single master. In some embodiments, one of the slaves is an off-board secure element, while the other is an on-board secure element that has been soldered to a Printed Circuit Board (PCB) and physically potted over.

In some embodiments, rather than implementing a switch implementation, the devices connected to the shared bus could be moved in and out of the desired modes (e.g., slave mode and master mode) and non-participants could be set as inputs. In this implementation, the switches may be considered logical switches as opposed to physical ones.

During manufacture (or any other time) the normal master (e.g., the general purpose processor) can set a bus state such that the normal master is not actively participating in communications with the on-board secure element. Specifically, the normal master controls one or more digital switch mechanisms to short the signals between the secure element connections, and relays another signal from one secure element to the other. The relayed signal may be received at a normal output port. Thus, the general purpose processor becomes transparent and direct interfacing between the secure elements is allowed as if the on-board secure element was removeable.

In some embodiments, when the external secure element is to become the master, the general purpose processor configures the switches to a shared master-slave bus such that the clock is shorted between the two secure elements and both secure element connections have access to the data line (e.g., a Universal Asynchronous Receiver/Transmitter (UART), I2C bus, or any other device or driver used in conjunction with communciation standards such as EIA, RS-232, RS-422, RS-485, etc.).

One aspect of the switching mechanisms described herein is that it becomes possible to support the simultaneous utilization of two secure elements on a single UART. Advantageously, the switching mechanisms described herein substantially prevent the on-board secure element's data from being visible on the external data line making it more difficult to "sniff."

The present disclosure will be further understood from the drawings and the following detailed description. Although this description sets forth specific details, it is understood that certain embodiments of the invention may be practiced without these specific details. It is also understood that in some instances, well-known circuits, components and techniques have not been shown in detail in order to avoid obscuring the understanding of the invention.

### BRIEF DESCRIPTION OF THE DRAWINGS

The present disclosure is described in conjunction with the appended figures:
Fig. 1 is block diagram depicting a communication system in accordance with embodiments of the present disclosure;
Fig. 2A is a block diagram depicting a processing device in accordance with embodiments of the present disclosure;
Fig. 2B is a block diagram depicting a first configuration of the processing device in accordance with embodiments of the present disclosure;
Fig. 2C is a block diagram depicting a second configuration of the processing device in accordance with embodiments of the present disclosure;
Fig. 2D is a block diagram depicting a third configuration of the processing device in accordance with embodiments of the present disclosure;
Fig. 3 is a block diagram depicting additional details of the switching mechanisms in accordance with embodiments of the present disclosure;
Fig. 4 is a block diagram depicting additional details of a processing device in accordance with embodiments of the present disclosure;
Fig. 5 is a flow chart depicting a method for controlling a shared communication bus in accordance with embodiments of the present disclosure; and
Fig. 6 is a flow chart depicting a method of programming an on-board secure element in accordance with embodiments of the present disclosure.

### DETAILED DESCRIPTION

The ensuing description provides embodiments only, and is not intended to limit the scope, applicability, or configuration of the claims. Rather, the ensuing description will provide those skilled in the art with an enabling description for implementing the described embodiments. It being understood that various changes may be made in the function and arrangement of elements without departing from the scope of the appended claims.

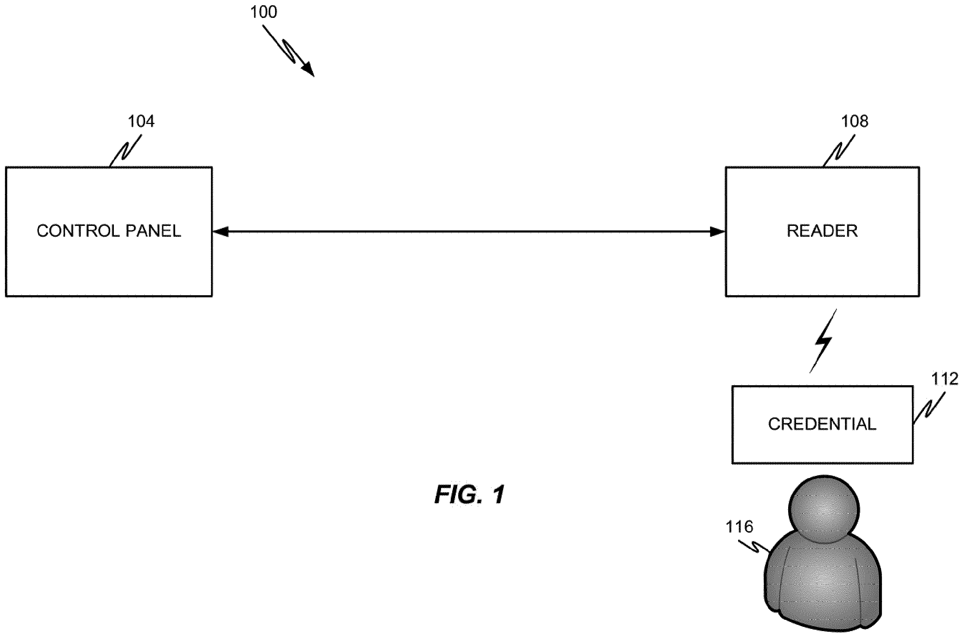

Referring initially to Fig. 1, a communication system 100 will be described in accordance with at least some embodiments of the present disclosure. The depicted communication system 100 includes a control panel 104, a reader 108, and a credential 112. The reader 108 and credential 112 may be configured to exchange communications with one another using either contact-based or contactless communication protocols. In some embodiments, the credential 112 is carried by a user 116 and is presented to the reader 108 by the user 116 in an attempt to access an asset protected by the reader 108. The reader 108 may be protecting one or more of a physical asset, a logical asset, or a combination of physical and logical assets.

In some embodiments, the credential 112 may be configured to carry data (e.g., credential data, keys, site codes, etc.) that enables the credential 112 to authenticate with the reader 108 (e.g., via one-way or mutual authentication) and then prove its access permissions to the reader 108. Alternatively, or in addition, the credential 112 may be configured to carry one or more applications (e.g., executable code embedded on the credential 112). Alternatively, or in addition, the credential 112 could be part of another intelligent device, such as a smartphone. As some examples, the credential 112 may correspond to a contact-based card (e.g., magstripe card, Wiegand card, credential with a barcode or QR code, etc.) or a contactless proximity card operating at a nominal frequency of approximately 125kHz. Alternatively, or in addition, the credential 112 may correspond to a contact smart card or contactless smart card operating at a nominal frequency of approximately 13.56MHz. Alternatively, or in addition, the credential 112 may correspond to an NFC-enabled device operating in a credential emulation mode or peer-to-peer mode.

The reader 108 may also correspond to an NFC-enabled device operating in a peer-to-peer mode or a reader mode. Alternatively, or in addition, the reader 108 may correspond to a traditional reader configured to read contact-based or contactless credentials. It should be appreciated that the reader 108 may support multiple different communication protocols and, therefore, may comprise multiple modules for each of the protocols. As an example, the reader 108 may comprise one module for reading contact-based credentials 112 (e.g., a slot or contact interface) and another module for reading contactless credentials 112 (e.g., an antenna and driver).

As noted above, the reader 108 may be configured to protect one or more assets. To achieve this goal, the reader 108 may be configured to first authenticate the credential 112 (e.g., one-way authentication or mutual authentication) and then analyze data received from the credential 112 to determine if the credential is allowed access to the asset protected by the reader 108. Alternatively, or in addition, the reader 108 may perform the authentication with the credential 112, but then may pass the credential information to the control panel 104 where it is analyzed and the decision is made to either grant or deny the user 116 access to the asset protected by the reader 108. In some embodiments, when a decision is made to grant the user 116 access, a control signal may be transmitted from the control panel 104 back to the reader 108 where the reader 108 releases the protected asset to allow the user 116 to gain access thereto. The functions performed by the reader 108 can vary depending upon the type and nature of the asset being protected by the reader 108. If the decision is made to deny the user 116 access, either no control signal is sent back to the reader 108 or a deny access control signal is sent back to the reader 108.

Certain embodiments of the present disclosure also contemplate the possibility that the reader 108 may not be connected to a control panel 104. Such a reader 108 is often referred to as a non-networked reader or a standalone reader. Readers of this type may either be configured to make the access control decision themselves or the credential 112 may be configured to make the access control decision for itself. Details of such a credential 112 are described in U.S. Patent No. 8,074,271 to Davis et al., the entire contents of which are hereby incorporated herein by reference.

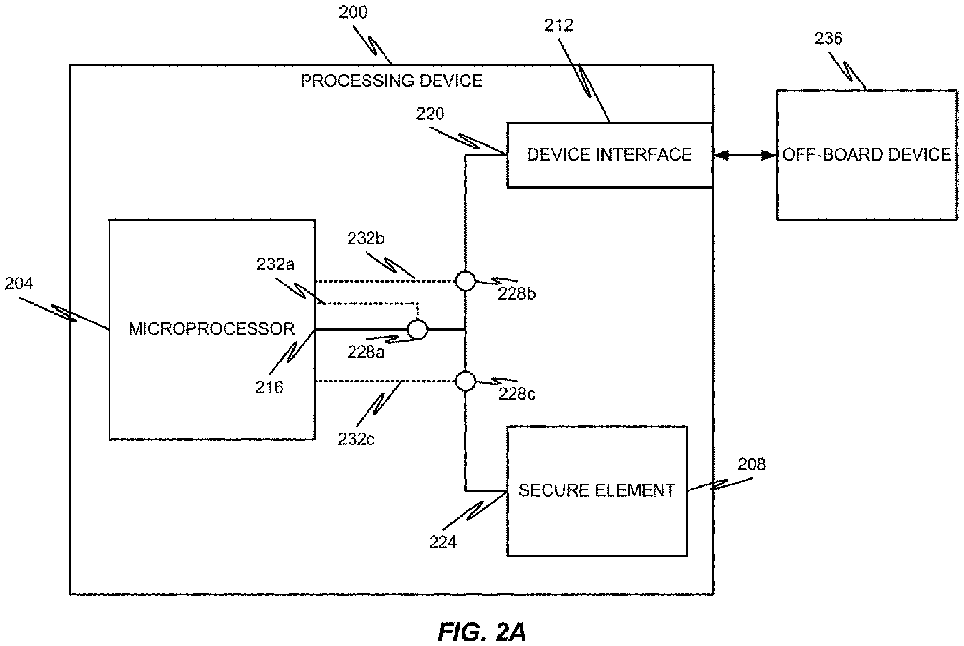

With reference now to Figs. 2A thru 4, various embodiments and configurations of a processing device 200 will be described in accordance with at least some embodiments of the present disclosure. As used herein, a processing device 200 may include a reader 108, a credential 112, or any other device comprising a secure element 208 or multiple secure elements 208. The configuration of the secure element 208 in the processing device 200 may depend upon the type of device incorporating the secure element 208. Examples of secure elements 208 that may be included in the processing device 200 include embedded and/or removable secure elements. More specific examples of secure elements that may be provided in the processing device 200 include, but are not limited to, a UICC, a SAM, a SIM card, a microSD card, a miniSD card, or any other processing device that provides a secure processing and/or storage environment.

In some embodiments, the secure element 208 may be embedded in the processing device 200, which means that the secure element 208 may be soldered onto a PCB of the secure element 208, may be protected with a potting material, etc. Other components of the processing device 200 may be potted with the secure element 208. For instance, a microprocessor 204 or general purpose processor of the processing device 200 may be potted with the secure element 208 on a common PCB.

As can be seen in Fig. 2A, the processing device 200 may comprise a microprocessor 204 that is in communication with the secure element 208 via a single communication bus. In particular, a single wire protocol may be used to exchange communication between the microprocessor 204 and secure element 208. Thus, a single I/O port 216 of the microprocessor 204 may be connected to a single I/O port 224 of the secure element 208.

The processing device 200 may also comprise a device interface 212 that enables an off-board device 236 to interact and connect with the communication bus that connects the microprocessor 204 and secure element 208. In some embodiments, the off-board device 236 may correspond to a secure element (or device carrying a secure element) that is similar or identical to the secure element 208 except that it is not part of the processing device 200. As a non-limiting example, the off-board device 236 may correspond to a removable secure element whereas the secure element 208 may correspond to an embedded secure element.

The device interface 212 may be configured to receive the off-board device 236 and electrically connect the off-board device 236 to the single communication bus. In some embodiments, the device interface 212 corresponds to one or multiple devices that can physically receive the off-board device 236 (e.g., a port, slot, etc.) as well as one or multiple devices that establish an electrical connection between the off-board device 236 and the single communication bus. In the depicted example, a single I/O port 220 of the device interface 212 may enable the electrical connection of the off-board device 236 to the single communication bus.

In accordance with at least some embodiments, the communication bus between the microprocessor 204 and secure element 208 may correspond to a master/slave bus where only one device can be a master and one device can be a slave at any particular time. This single master/slave relationship is generally easy to enforce when the microprocessor 204 and secure element 208 are the only devices connected to the communication bus - generally the microprocessor 204 operates as the master and the secure element 208 operates as the slave. The situation, however, is complicated when a third device (e.g., the off-board device 236) is connected to the communication bus. Enforcement of this single master/single slave requirement may be controlled by the microprocessor 204 via a series of switches 228a-c and corresponding switch control lines 232a-c. Depending upon which device is to operate as a slave and which device is to operate as a master on the communication bus, the microprocessor 204 can control the state of the switches 228a-c via the switch control lines 232a-c.

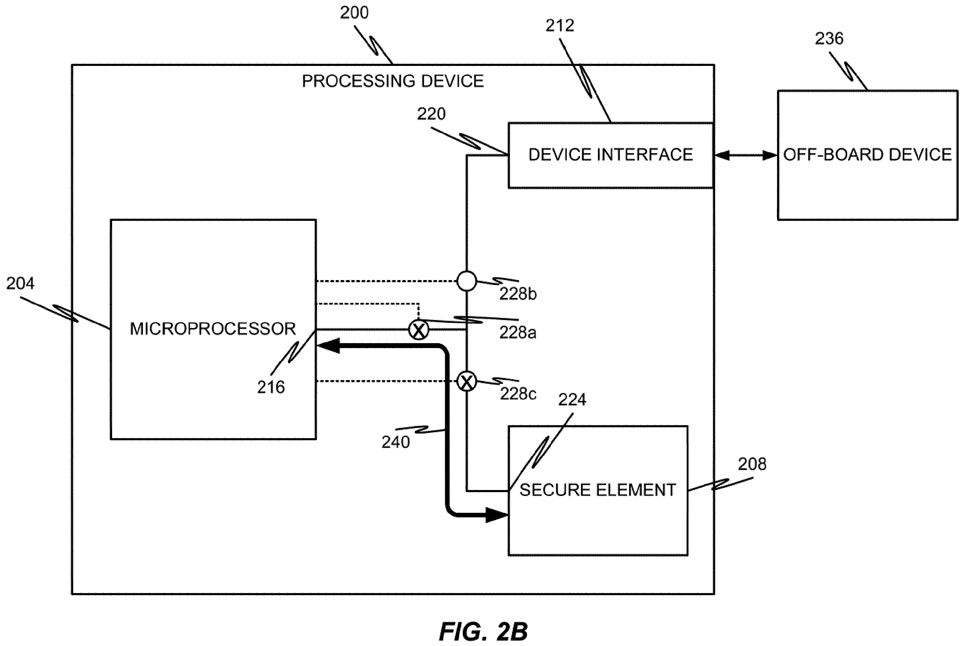

A first configuration of the communication bus is depicted in Fig. 2B. Specifically, the microprocessor 204 may be configured to close the first switch 228a and third switch 228c while leaving the second switch 228b open. This causes a first communication path 240 to be established on the master/slave bus. The first communication path 240 enables the microprocessor 204 and secure element 208 to exchange data with one another. Often times, the first communication path 240 may be employed with the microprocessor 204 operating as the master and the secure element 208 operating as the slave.

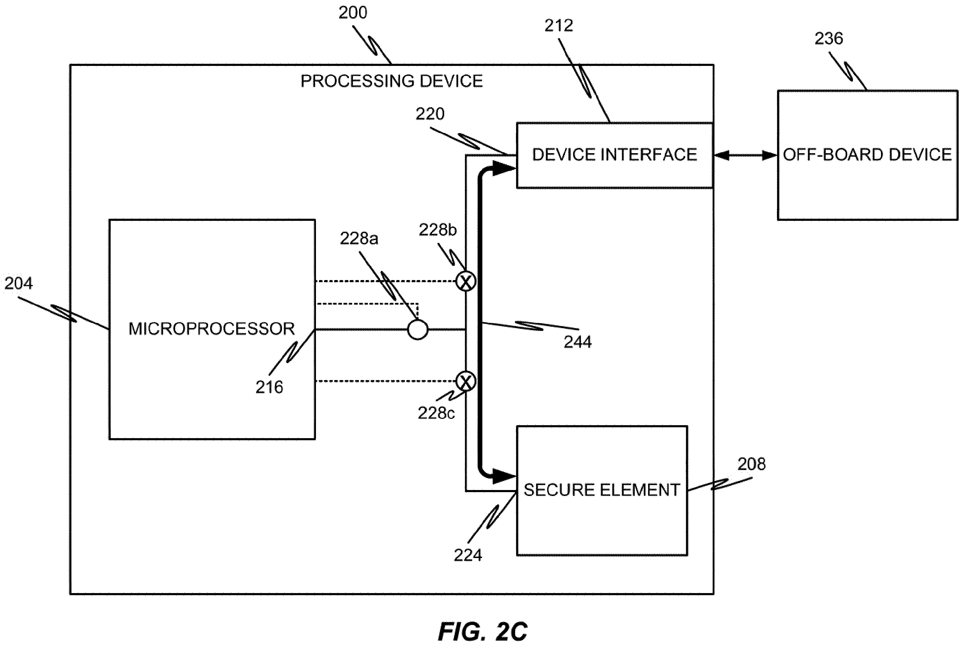

A second configuration of the communication bus is depicted in Fig. 2C. Specifically, the microprocessor 204 may be configured to close the second switch 228b and the third switch 228c while leaving the first switch 228a open. This causes a second communication path 244 to be established on the master/slave bus. The second communication path 244 enables the off-board device 236 to communicate with the secure element 208 via the communication bus. The microprocessor 204 has removed itself from the communication bus. Therefore, either the off-board device 236 or the secure element 208 can operate as a master while the other device operates as a slave. This particular configuration of the communication bus may be useful to program the secure element 208 with data from the off-board device 236. This may be referred to as in-situ programming.

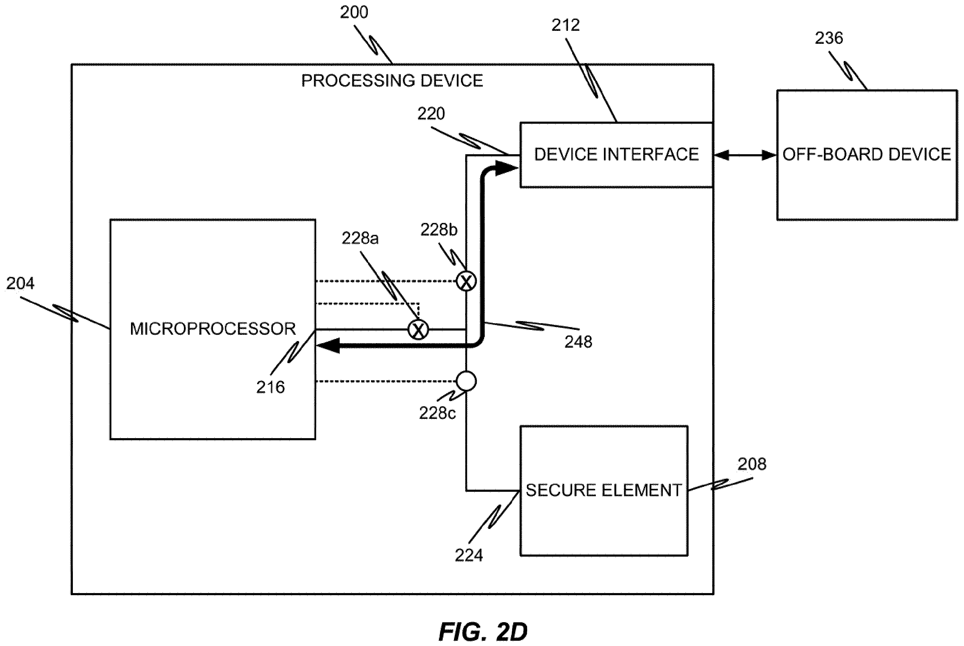

A third configuration of the communication bus is depicted in Fig. 2D. Specifically, the microprocessor 204 may be configured to clos the first switch 228a and the second switch 228b while leaving the third switch 228c open. This causes a third communication path 248 to be established on the master/slave bus. The third communication path 248 enables the microprocessor 204 to communicate with the off-board device 236. Since the off-board device 236 may correspond to a removable secure element, the microprocessor 204 may be configured to operate as a master while the off-board device 236 operates as a slave. Thus, depending upon which communication path 240, 244, 248 is established at any given time, the off-board device 236 may operate as a master or slave secure element.

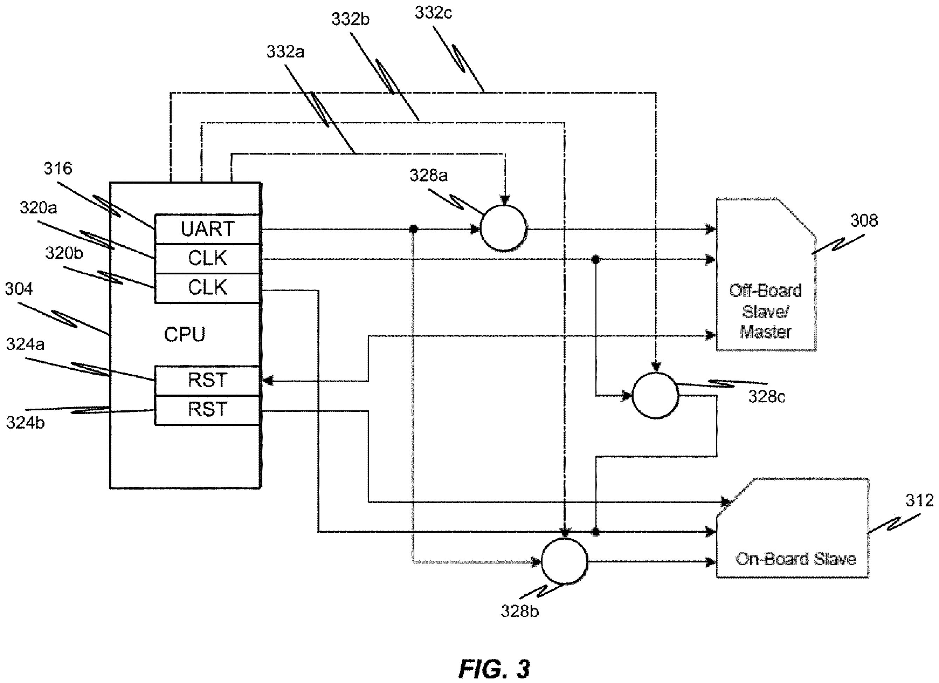

Fig. 3 depicts additional details of the communication bus that enables the communication paths 240, 244, 248 to be established between the multiple devices connected to the bus. As discussed above, however, the nature of the communication bus and the single wire protocol used to exchange data with the secure elements may dictate that only two devices be actively using the communication bus at a time. Moreover, of the two devices communicating on the bus, one may be required to assume a master role whereas the other may be required to assume a slave role.

As shown in Fig. 3, the processing device 200 may comprise a central processing unit (CPU) 304 (similar or identical to the microprocessor 204), an off-board slave/master 308 (similar or identical to the off-board device 236 connected to the device interface 212), and an on-board slave 312 (similar or identical to the secure element 208).

The CPU 304, in some embodiments, comprises a single data port 316, a first clock (CLK) 320a, a second CLK 320b, a first reset (RST) 324a, and a second RST 324b. The data port 316 or line may correspond to a UART line, an I2C line, or any other serial data port. Although the CPU 304 is depicted as comprising a UART, it should be appreciated that embodiments of the present disclosure are not so limited. Any device or collection of devices used to enable serial communications over a computer or peripheral device serial port may be used for the single data port 316.

In some embodiments, the data port 316 is connected to two switches (e.g., first data switch 328a and third data switch 328b). In some embodiments, only one of the two data switches 328a, 328b can be active (e.g., closed) at any time. Enforcement of such a rule dictates that the CPU 304 is only allowed to have the data port 316 connected to the on-board slave 312 or the off-board slave/master 308, not both at the same time. Thus, the CPU 304 will only be able to communicate with one of the devices 308, 312 at a time. The switches 328a, 328b are controlled by control lines 332a, 332b, respectively.

The first CLK 320a is connected to the off-board slave/master 308 and a third switch 328c. The second CLK 320b is connected to the on-board slave 312 and the third switch 328c. This means that the clocks can operate independently, thereby allowing the devices 308, 312 to operate simultaneously and independently. Control of the third switch 328c is achieved via a third control line 332c. The first RST 324a is provided as an output to the off-board slave/master 308 while the second RST 324b is provided as an output to the on-board slave 312.

When the off-board slave/master 308 is to become the master as shown in Fig. 2C, the CPU 304 configures the third switch 328c such that the clock is shorted between the off-board slave/master 308 and the on-board slave 312. The CPU 304 also configures the first and second switches 328a, 328b such that both devices have access to the data line on the communication bus. At this point, the CPU 304 is unable to communicate via the data line. While in this state, the off-board slave/master 308 operates as the master and is configured to write data (e.g., program) to the on-board slave 312. Furthermore, while in this state, the CPU 304 is configured to set the first RST 324a to be an input. The CPU 304 monitors the state of the first RST 324a to determine whether any changes have been made to the reset value by the off-board slave/master 308 operating as the master. If such a change in the reset value is detected at the first RST 324a, the CPU 304 copies the reset value for output to the on-board slave 312 via the second RST 324b. The clock and data lines on the bus are not handled in the same way as the reset because they transition too quickly as compared to the reset value.

Once the off-board slave/master 308 is finished acting as a master (e.g., programming of the on-board slave 312 is completed), the CPU 304 switches the state of the first or second switch 328a, 328, thereby placing the CPU 304 into communication with either the off-board slave/master 308 in a slave role or the on-board slave 312 in a slave role. Additionally, the third switch 328c is switched to remove the short between the clocks 320a, 320b.

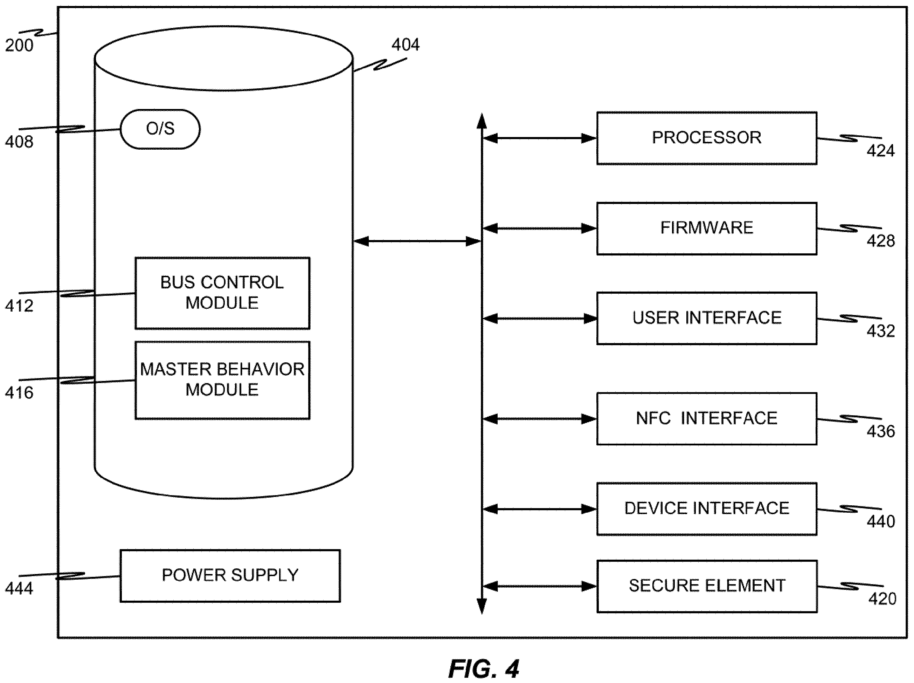

With reference now to Fig. 4, further details of a processing device 200 will be described in accordance with at least some embodiments of the present disclosure. The processing device 200, as noted above, may correspond to reader 108, the credential 112, or any other device comprising one or more secure elements. As non-limiting examples, the processing device 200 may correspond to an NFC-enabled phone or smartphone, an NFC-enabled computer, an NFC-enabled tablet, an NFC-enabled laptop, or any other processing device that includes a general purpose processor 424 (e.g., microprocessor 204, CPU 304, etc.) and a secure element 420 (e.g., secure element 208, on-board slave 312, etc.).

The processing device 200 may comprise memory 404, one or more secure elements 420, firmware 428, one or more processors 424, a user interface 432, an NFC interface 436, a device interface 440, and a power supply 444.

The memory 404 generally comprises software routines facilitating, in operation, pre-determined functionality of the processing device 200. The memory 404 may be implemented using various types of electronic memory generally including at least one array of non-volatile memory cells (e.g., PROM, EPROM, EEPROM, etc.) and/or at least one array of DRAM cells. Some portions of the memory 404 may be pre-programmed and write-protected thereafter, whereas other portions of the memory 404 may selectively be modified or erased. The memory 404 can either be a temporary data storage location or a permanent data storage location. Accordingly, the memory 404 may alternatively, or additionally, include long-term memory devices, such as RAM, ROM, a magnetic storage device, a solid-state storage device, an optical storage device, a logic circuit, or any combination of such devices. It should further be appreciated that the programs and data that may be maintained in the memory 404 can comprise software, firmware or hardware logic, depending on the particular implementation of memory 404.

In some embodiments, instructions contained in memory 404 can be implemented or executed by the processor 424. Alternatively, or in addition, various capabilities of the processing device 200 may be implemented in firmware 428.

The processor 424 may include any general-purpose programmable processor, digital signal processor (DSP) or controller for executing application programming. Alternatively, the processor 424 may comprise a specially configured application specific integrated circuit (ASIC). The processor 424 generally functions to run programming code implementing various functions performed by the processing device 200.

Some of the applications or sets of instructions that may be stored in memory 404 and/or firmware 428 include an Operating System (O/S) 408, a bus control module 412, and a master behavior module 416. The O/S 408 may be a high-level application that executes the primary operational functions of the processing device 200 such as power-up functions, tamper detection functions, communication functions, and any other function that supports the basic operation of the processing device 200.

The bus control module 412 may be configured to control the various switches described herein via the control lines. In particular, the bus control module 412 may comprise the logic to determine when to establish the communication paths 240, 244, 248 and how to establish the communication paths 240, 244, 248. The way in which the bus control module 412 controls the switches may depend upon the type of switch employed. In particular, the switches described herein may correspond to software switches and/or hardware switches. In some embodiments, the switches correspond to hardware devices that physically connect and disconnect lines from one another. Suitable examples of such switches include, without limitation, any type of transistor or set of transistors, logical switches, mechanical switches or relays, bus switches, digital logic, power switches, etc.

The master behavior module 416 may provide the functionality that controls the processor 424 when operating as a master device. Specifically, the master behavior module 416 may comprise the instructions that control the behavior of the processor 424 and the way in which it interacts with the secure element 420 when the first communication path 240 or the third communication path 248 are established. The types of functions that may be provided by the master behavior module 416 include, without limitation, data-processing functions, instructions for sending data to a secure element, and/or instructions for receiving data from a secure element.

The user interface 432 may comprise a user input and/or user output. Examples of user outputs that may be included in the user interface 432 include one or more lights, speakers, LEDs, an array of LEDs, plasma displays, and so on. Examples of suitable user inputs that may be used for the user interface 432 include one or more of a button, microphone, keyboard, PIN pad, keypad, group of buttons, camera, etc. The user interface 432 may also comprise a combination user input and user output, such as a touch-sensitive display (e.g., capacitive sense display, optical finger navigation device, etc.).

The NFC interface 436 may provide the hardware and drivers that enable the processing device 200 to exchange data any other NFC-enabled device (e.g., credential 112 when operating in a read mode, reader 108 when operating in a credential emulation, other NFC-enabled devices when operating in a Peer-to-Peer mode, etc.). The NFC interface 436 may also comprise a generic credential interface (e.g., non-NFC-compatible portion) that utilizes contact-based and/or contactless communications other than NFC. In some embodiments, the NFC interface 436 may facilitate the reading of NFC devices as well as other non-NFC-enabled devices (e.g., magstripe cards, Wiegand cards, smart cards, proximity cards or prox cards, QR codes, barcodes, optical cards, etc.).

Moreover, although embodiments of the present disclosure generally describe the user of NFC interfaces and NFC-enabled devices, it should be appreciated that embodiments of the present disclosure are not so limited. More specifically, interfaces of non-NFC protocols may be employed. One suitable alternative to NFC that may still utilize secure elements is a variant of the Bluetooth standard - Bluetooth 4. Embodiments of the present disclosure contemplate utilizing Bluetooth interfaces and/or protocols in addition to or in lieu of the NFC interfaces and/or protocols described herein. Thus, the NFC interface 436 could also be implemented as a Bluetooth interface without departing from the scope of the present disclosure.

The device interface 440 may correspond to a device or collection of devices that enable the processing device 200 to connect with and exchange messages with the off-board device 236 or off-board slave/master 308 either directly or over a communication network (e.g., cellular network, TCP/IP network, SNMP network, etc.). Accordingly, the device interface 440 may comprise multiple different devices or communication ports. Examples of the device interface 440 include, without limitation, a network interface card, a modem, a USB port, a parallel port, a serial port, a Small Computer Systems Interface (SCSI) port, an RS-232 port, a Wiegand port, an Ethernet port, an infrared port, an RF interface, a Bluetooth interface, a cellular communication interface, an 802.1 IN network interface, and/or other wired or wireless communication network interfaces.

The power supply 444 may comprise an internal source of power (e.g., a battery). Alternatively, or in addition, the power supply 444 may comprise a specially-adapted port along with a power conditioner configured to convert AC power from an external outlet into DC power that is useable by the processing device 200. The power supply 444 may further comprise the ability to charge the internal source of power with power from an external source.

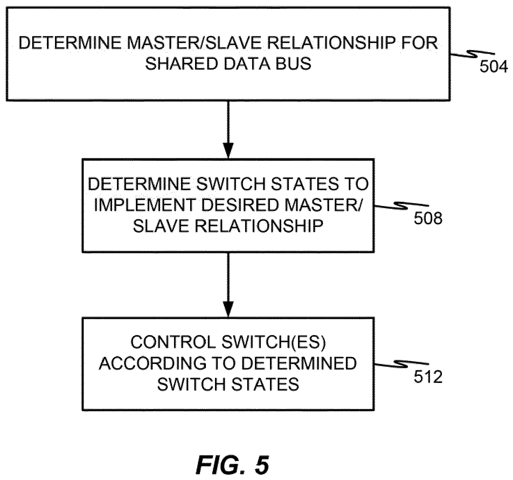

With reference now to Fig. 5, a method of controlling a shared master/slave communication bus will be described in accordance with embodiments of the present disclosure. The method begins with the bus control module 412 determining the master/slave relationship that is to be implemented for the shared bus (step 504). Based on the determined relationship, the bus control module 412 then determines the states required of the switches to enforce the determined relationship (step 508). Specifically, depending upon whether the first, second, or third communication path 240, 244, 248, respectively, is to be created, the bus control module 412 determines whether each switch is to be opened or closed.

Once the switch states have been determined, the bus control module 412 sends the appropriate control signals to the switches via the control lines (step 512). In some embodiments, if the bus control module 412 determines that the secure element 208 is to be written to by the off-board device 236, then the bus control module 412 causes the microprocessor 208 to establish the second communication path 244 by shorting the clocks and connecting each of the devices to the data line of the communication bus. At this time, the microprocessor 204 is unable to send or receive data via the data line of the communication bus.

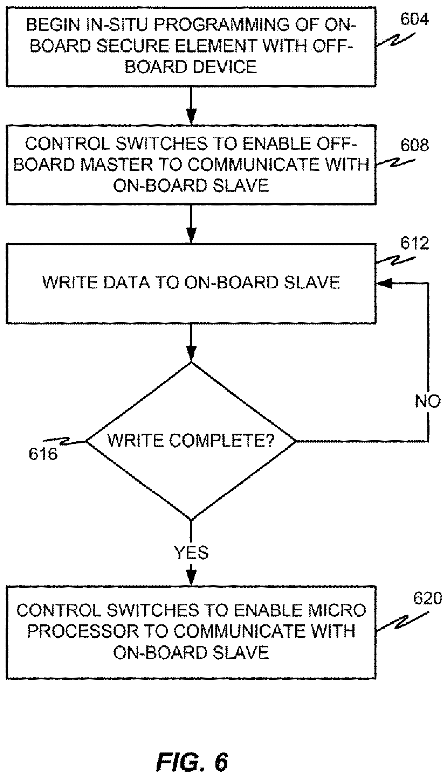

With reference now to Fig. 6, a method of programming an on-board secure element 208 will be described in accordance with at least some embodiments of the present disclosure. The method begins when the bus control module 412 determines that the off-board device 236 is going to begin programming the on-board secure element 208 (step 604). Upon making this determination, the switches on the communication bus are manipulated such that the off-board device 236 is in communication with the on-board secure element 208 (step 608). The two devices may be in direct communication with one another or they may be communicating with one another through the data port of the microprocessor/CPU 204, 304.

The method continues with the off-board device 236 writing data to the on-board secure element 208 (step 612). This process continues until the write is completed (step 620). Thereafter, the bus control module 412 re-manipulates the switches of the shared communication bus to enable microprocessor/CPU 204, 304 to communicate with either the on-board secure element 208 or the off-board device 236 (step 620).

An advantage of the present disclosure is that the on-board secure element 208 can be written to/programmed without physically removing the on-board secure element 208 from the processing device 200. More specifically, the same communication bus used between the microprocessor and the on-board secure element 208 can be borrowed to accomplish the aforementioned programming of the on-board secure element 208. Not only does this improve the convenience of programming the on-board secure element, but it also increases the security associated with the programming since sniffing of the data written to the on-board secure element 208 is more difficult than if the data were transmitted over a communication network.

In the foregoing description, for the purposes of illustration, methods were described in a particular order. It should be appreciated that in alternate embodiments, the methods and steps thereof may be performed in a different order than that described. It should also be appreciated that the methods described above may be performed by hardware components or may be embodied in sequences of machine-executable instructions, which may be used to cause a machine, such as a general-purpose or special-purpose processor or logic circuits programmed with the instructions to perform the methods. These machine-executable instructions may be stored on one or more machine readable mediums, such as CD-ROMs or other type of optical disks, floppy diskettes, ROMs, RAMs, EPROMs, EEPROMs, SIMs, SAMs, magnetic or optical cards, flash memory, or other types of machine-readable mediums suitable for storing electronic instructions. Alternatively, the methods may be performed by a combination of hardware and software.

Specific details were given in the description to provide a thorough understanding of the embodiments. However, it will be understood by one of ordinary skill in the art that the embodiments may be practiced without these specific details. For example, circuits may be shown in block diagrams in order not to obscure the embodiments in unnecessary detail. In other instances, well-known circuits, processes, algorithms, structures, and techniques may be shown without unnecessary detail in order to avoid obscuring the embodiments.

Also, it is noted that the embodiments were described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a machine readable medium such as storage medium. A processor(s) may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

While illustrative embodiments of the disclosure have been described in detail herein, it is to be understood that the inventive concepts may be otherwise variously embodied and employed, and that the appended claims are intended to be construed to include such variations, except as limited by the prior art.

## Claims

1. A method, comprising:
determining, at a processor (204, 304), an electrical connection of an off-board device (236, 308) to program an on-board secure element (208), the processor and on-board secure element being in communication with one another via a communication bus; the method being **characterized by**:
configuring one or more switches (228a, 228b, 228c, 328a, 328b, 328c) on the communication bus and external to the processor to replace the processor with the off-board device (236, 308) as a master to the on-board secure element (208, 312) thereby enabling the off-board device (236, 308) to begin programming the on-board secure element (208, 312);
shorting a clock (320a) of the off-board device (236, 308) with a clock (320b) of the on-board secure element (208, 312);
enabling the off-board device (236, 308) and the on-board secure element (208, 312) to have access to a data line on the communication bus;
excluding the processor (204, 304) from using the data line while the off-board device (236, 308) and on-board secure element (208, 312) have access to the data line;
monitoring, by the processor (204, 304), a first reset (324a) value controlled by the off-board device (236, 308); and
updating a second reset (324b) value in accordance with the monitored first reset (324a) value, the second reset (324b) value being transmitted to the on-board secure element (208, 312).

2. The method of claim 1, wherein the communication bus corresponds to a master/slave bus where only one device can be a master and one device can be a slave at any particular time, the method further comprising:
while the off-board device (236, 308) is the master to the on-board secure element (208, 312), enabling the off-board device (236, 308) to program the on-board secure element (208, 312) by carrying data from the off-board device (236, 308) to the on-board device (208, 312) via the communication bus;
determining that the off-board device (236, 308) is done programming the on-board secure element (208, 312); and
configuring the one or more switches (228a, 228b, 228c, 328a, 328b, 328c) on the communication bus to replace the off-board device (236, 308) with the processor as the master to the on-board secure element;
wherein the off-board device (236, 308) is a removable secure element and the on-board secure element is an embedded secure element.

3. The method of claim 1, wherein the processor comprises at least one of a microprocessor and central processing unit.

4. The method of claim 1, wherein the communication bus comprises a serial data line.

5. The method of claim 1, wherein the serial data line utilizes at least one of a Universal Asynchronous Receiver/Transmitter (UART) and I2C bus.

6. A processing device, comprising:
a processor (204, 304);
an on-board secure element (208, 312); and a communication bus connecting the processor (204, 304) and the on-board secure element (208, 312), wherein the communication bus utilizes a single wire protocol; the processing device being characterized that it further comprises a plurality of switches (228a, 228b, 228c, 328a, 328b, 328c) on the communication bus and external to the processor (204, 304) that are switchable between two or more different states so as to enable the processor (204, 304) to re-configure the communication bus such that either the processor (204, 304) is a master to the on-board secure element (208, 312) or an off-board device (236, 308) is a master to the on-board secure element (208, 312), wherein plurality of switches (228a, 228b, 228c, 328a, 328b, 328c) comprise a first and second switch (228a, 228b, 328a, 328b) that control a data line on the communication bus and wherein the plurality of switches also comprise a third switch (228c, 328c) that shorts a clock (320a, 320b) between the off-board device (236, 308) and the on-board secure element (208, 312).

7. The device of claim 6, wherein the device is configured to allow the on-board secure element (208, 312) to be a slave to only one of the processor (204, 304) and the off-board device (236, 308) at a time.

8. The device of claim 6, wherein the processor (204, 304) and on-board secure element (208, 312) are mounted to a common Printed Circuit Board (PCB); and wherein the on-board secure element (208, 312) is covered with a potting material.

9. The device of claim 6, further comprising a device interface (440) configured to receive the off-board device (236, 308), wherein the off-board device (236, 308) corresponds to a removable secure element.

10. The device of claim 9, wherein the off-board device (236, 308) comprises at least one of a microSD card, miniSD card, SIM card, and SAM.

11. The device of claim 6, wherein the processor (204, 304) comprises at least one of a microprocessor and central processing unit.

12. The device of claim 11, further comprising a Near Field Communications (NFC) interface, whereby the NFC interface enables the device to operate in at least one of a card emulation mode, a reader mode, and a peer-to-peer mode.

13. The device of claim 11, further comprising a Bluetooth interface.

## Patentansprüche

1. Verfahren, das die folgenden Schritte umfasst:
Festlegen, an einem Prozessor (204, 304), einer elektrischen Verbindung einer platinenexternen Vorrichtung (236, 308) zum Programmieren eines platineninternen sicheren Elements (208), wobei der Prozessor und ein platineninternes sicheres Element über einen Kommunikationsbus miteinander in Kommunikation stehen;
wobei das Verfahren durch die folgenden Schritte gekennzeichnet ist:
Konfigurieren eines oder mehrerer Schalter (228a, 228b, 228c, 328a, 328b, 328c) auf dem Kommunikationsbus und prozessorextern zum Ersetzen des Prozessors durch die platinenexterne Vorrichtung (236, 308) als ein Master für das platineninterne sichere Element (208, 312), wodurch die platinenexterne Vorrichtung (236, 308) freigeschaltet wird, mit dem Programmieren des platineninternen sicheren Elements (208, 312) zu beginnen;
Kurzschließen eines Taktgebers (320a) der platinenexternen Vorrichtung (236, 308) mit einem Taktgeber (320b) des platineninternen sicheren Elements (208, 312);
Freischalten der platinenexternen Vorrichtung (236, 308) und des platineninternen sicheren Elements (208, 312) zum Erhalten eines Zugriffs auf eine Datenleitung auf dem Kommunikationsbus;
Ausschließen des Prozessors (204, 304) vom Verwenden der Datenleitung, während die platinenexterne Vorrichtung (236, 308) und das platineninterne sichere Element (208, 312) Zugriff auf die Datenleitung haben;
Überwachen, durch den Prozessor (204, 304), eines ersten Rücksetz(324a)-Werts, der von der platinenexternen Vorrichtung (236, 308) gesteuert wird; und
Aktualisieren eines zweiten Rücksetz(324b)-Werts gemäß dem überwachten ersten Rücksetz(324a)-Wert, wobei der zweite Rücksetz(324b)-Wert an das platineninterne sichere Element (208, 312) übermittelt wird.

2. Verfahren nach Anspruch 1, wobei der Kommunikationsbus einem Master/Slave-Bus entspricht, bei dem zu irgendeinem bestimmten Zeitpunkt nur eine Vorrichtung ein Master und eine Vorrichtung ein Slave sein kann, wobei das Verfahren ferner die folgenden Schritte umfasst:
während die platinenexterne Vorrichtung (236, 308) der Master für das platineninterne sichere Element (208, 312) ist, Freischalten der platinenexternen Vorrichtung (236, 308) zum Programmieren des platineninternen sicheren Elements (208, 312), indem Daten von der platinenexternen Vorrichtung (236, 308) über den Kommunikationsbus zur platineninternen Vorrichtung (208, 312) getragen werden;
Festlegen, dass die platinenexterne Vorrichtung (236, 308) das Programmieren des platineninternen sicheren Elements (208, 312) abgeschlossen hat; und
Konfigurieren des einen oder der mehreren Schalter (228a, 228b, 228c, 328a, 328b, 328c) auf dem Kommunikationsbus zum Ersetzen der platinenexternen Vorrichtung (236, 308) durch den Prozessor als den Master für das platineninterne sichere Element;
wobei die platinenexterne Vorrichtung (236, 308) ein entfernbares sicheres Element und das platineninterne sichere Element ein eingebettetes sicheres Element ist.

3. Verfahren nach Anspruch 1, wobei der Prozessor einen Mikroprozessor und/oder eine zentrale Verarbeitungseinheit umfasst.

4. Verfahren nach Anspruch 1, wobei der Kommunikationsbus eine serielle Datenleitung umfasst.

5. Verfahren nach Anspruch 1, wobei die serielle Datenleitung einen Universal Asynchronous Receiver/Transmitter(UART)- und/oder einen I2C-Bus verwendet.

6. Verarbeitungsvorrichtung, die Folgendes umfasst:
einen Prozessor (204, 304);
ein platineninternes sicheres Element (208, 312); und
einen Kommunikationsbus, der den Prozessor (204, 304) und das platineninterne sichere Element (208, 312) verbindet, wobei der Kommunikationsbus ein Ein-Draht-Protokoll verwendet; wobei die Verarbeitungsvorrichtung **dadurch gekennzeichnet ist, dass** sie ferner eine Vielzahl von Schaltern (228a, 228b, 228c, 328a, 328b, 328c) auf dem Kommunikationsbus und extern zum Prozessor (204, 304) umfasst, die zwischen zwei oder mehr verschiedenen Zuständen umschaltbar sind, um somit den Prozessor (204, 304) freizuschalten, den Kommunikationsbus derart zu Rekonfigurieren, dass entweder der Prozessor (204, 304) ein Master für das platineninterne sichere Element (208, 312) ist oder eine platinenexterne Vorrichtung (236, 308) ein Master für das platineninterne sichere Element (208, 312) ist, wobei die Vielzahl von Schaltern (228a, 228b, 228c, 328a, 328b, 328c) einen ersten und einen zweiten Schalter (228a, 228b, 328a, 328b) umfasst, die eine Datenleitung auf dem Kommunikationsbus steuern, und wobei die Vielzahl von Schaltern auch einen dritten Schalter (228c, 328c) umfasst, der einen Taktgeber (320a, 320b) zwischen der platinenexternen Vorrichtung (236, 308) und dem platineninternen sicheren Element (208, 312) kurzschließt.

7. Vorrichtung nach Anspruch 6, wobei die Vorrichtung dafür ausgelegt ist, dem platineninternen sicheren Element (208, 312) zu erlauben, ein Slave für nur den Prozessor (204, 304) oder die platinenexterne Vorrichtung (236, 308) zurzeit zu sein.

8. Vorrichtung nach Anspruch 6, wobei der Prozessor (204, 304) und ein platineninternes sicheres Element (208, 312) auf einer gemeinsamen Leiterplatte (PCB) bzw. Platine montiert sind; und wobei das platineninterne sichere Element (208, 312) mit einem Vergussmaterial bedeckt ist.

9. Vorrichtung nach Anspruch 6, die ferner eine Vorrichtungsschnittstelle (440) umfasst, die ausgelegt ist zum Aufnehmen der platinenexternen Vorrichtung (236, 308), wobei die platinenexterne Vorrichtung (236, 308) einem entfernbaren sicheren Element entspricht.

10. Vorrichtung nach Anspruch 9, wobei die platinenexterne Vorrichtung (236, 308) mindestens eines von einer MicroSD-Karte, einer MiniSD-Karte, einer SIM-Karte und einer SAM umfasst.

11. Vorrichtung nach Anspruch 6, wobei der Prozessor (204, 304) einen Mikroprozessor und/oder eine zentrale Verarbeitungseinheit umfasst.

12. Vorrichtung nach Anspruch 11, die ferner eine Nahfeldkommunikation(NFC)-Schnittstelle umfasst, wobei die NFC-Schnittstelle die Vorrichtung befähigt, in mindestens einem der folgenden Modi zu arbeiten: ein Kartenemulationsmodus, ein Lesegerätmodus und ein Peer-to-Peer-Modus.

13. Vorrichtung nach Anspruch 11, die ferner eine Bluetooth-Schnittstelle umfasst.

## Revendications

1. Procédé comprenant :
la détermination, au niveau d'un processeur (204, 304), d'une connexion électrique d'un dispositif hors carte (236, 308) pour programmer un élément de sécurité monté sur carte (208), le processeur et l'élément de sécurité monté sur carte étant en communication l'un avec l'autre par l'intermédiaire d'un bus de communication ;
le procédé étant **caractérisé par** :
la configuration d'un ou de plusieurs commutateurs (228a, 228b, 228c, 328a, 328b, 328c) sur le bus de communication et à l'extérieur du processeur pour remplacer le processeur par le dispositif hors carte (236, 308) en tant que maître de l'élément de sécurité monté sur carte (208, 312) permettant ainsi au dispositif hors carte (236, 308) de commencer à programmer l'élément de sécurité monté sur carte (208, 312) ;
la mise en court-circuit d'une horloge (320a) du dispositif hors carte (236, 308) par une horloge (320b) de l'élément de sécurité monté sur carte (208, 312) ;
l'activation du dispositif hors carte (236, 308) et de l'élément de sécurité monté sur carte (208, 312) leur permettant d'avoir accès à une ligne de données sur le bus de communication ;
l'exclusion du processeur (204, 304) de l'utilisation de la ligne de données pendant que le dispositif hors carte (236, 308) et l'élément de sécurité monté sur carte (208, 312) ont accès à la ligne de données ;
la surveillance, par le processeur (204, 304), d'une première valeur de réinitialisation (324a) contrôlée par le dispositif hors carte (236, 308) ; et
la mise à jour d'une seconde valeur de réinitialisation (324b) conforme à la première valeur de réinitialisation (324a) surveillée, la seconde valeur de réinitialisation (324b) étant transmise à l'élément de sécurité monté sur carte (208, 312).

2. Procédé selon la revendication 1, dans lequel le bus de communication correspond à un bus maître/esclave où un seul dispositif peut être maître et un seul dispositif peut être esclave en un moment particulier, le procédé comprenant en outre :
l'activation du dispositif hors carte (236, 308), pendant que le dispositif hors carte (236, 308) est maître de l'élément de sécurité monté sur carte (208, 312), lui permettant de programmer l'élément de sécurité monté sur carte (208, 312) en transmettant des données du dispositif hors carte (236, 308) au dispositif monté sur carte (208, 312) par l'intermédiaire du bus de communication ;
la détermination du fait que le dispositif hors carte (236, 308) a terminé de programmer l'élément de sécurité monté sur carte (208, 312) ; et
la configuration du ou des commutateurs (228a, 228b, 228c, 328a, 328b, 328c) sur le bus de communication pour remplacer le dispositif hors carte (236, 308) par le processeur en tant que maître de l'élément de sécurité monté sur carte ;
dans lequel le dispositif hors carte (236, 308) est un élément de sécurité amovible et l'élément de sécurité monté sur carte est un élément de sécurité intégré.

3. Procédé selon la revendication 1, dans lequel le processeur comprend au moins un élément choisi entre un microprocesseur et une unité centrale de traitement.

4. Procédé selon la revendication 1, dans lequel le bus de communication comprend une ligne de données en série.

5. Procédé selon la revendication 1, dans lequel la ligne de données en série utilise au moins un dispositif parmi un récepteur/émetteur asynchrone universel (UART : Universal Asynchronous Receiver/ Transmitter) et un bus I2C.

6. Dispositif de traitement comprenant :
un processeur (204, 304) ;
un élément de sécurité monté sur carte (208, 312) ;
et un bus de communication reliant le processeur (204, 304) et l'élément de sécurité monté sur carte (208, 312), dans lequel le bus de communication utilise un protocole à un seul fil ; le dispositif de traitement étant **caractérisé en ce qu'**il comprend en outre une pluralité de commutateurs (228a, 228b, 228c, 328a, 328b, 328c) sur le bus de communication et extérieurs au processeur (204, 304) pouvant être commutés entre deux ou plus de deux états différents de façon à permettre au processeur (204, 304) de reconfigurer le bus de communication de sorte que soit le processeur (204, 304) est maître de l'élément de sécurité monté sur carte (208, 312) soit un dispositif hors carte (236, 308) est maître de l'élément de sécurité monté sur carte (208, 312), dans lequel
la pluralité de commutateurs (228a, 228b, 228c, 328a, 328b, 328c) comprend un premier et un second commutateur (228a, 228b, 328a, 328b) qui commandent une ligne de données sur le bus de communication et dans lequel la pluralité de commutateurs comprend également un troisième commutateur (228c, 328c) qui court-circuite une horloge (320a, 320b) entre le dispositif hors carte (236, 308) et l'élément de sécurité monté sur carte (208, 312).

7. Dispositif selon la revendication 6, dans lequel le dispositif est configuré pour permettre à l'élément de sécurité monté sur carte (208, 312) d'être esclave d'un seul élément à la fois entre le processeur (204, 304) et le dispositif hors carte (236, 308).

8. Dispositif selon la revendication 6, dans lequel le processeur (204, 304) et l'élément de sécurité monté sur carte (208, 312) sont montés sur une carte de circuit imprimé ordinaire (PCB : Printed Circuit Board) ; et dans lequel l'élément de sécurité monté sur carte (208, 312) est recouvert d'un matériau d'enrobage.

9. Dispositif selon la revendication 6, comprenant en outre une interface de dispositif (440) configurée pour recevoir le dispositif hors carte (236, 308), dans lequel le dispositif hors carte (236, 308) correspond à un élément de sécurité amovible.

10. Dispositif selon la revendication 9, dans lequel le dispositif hors carte (236, 308) comprend au moins l'une des cartes suivantes : carte microSD, carte miniSD, carte SIM et SAM.

11. Dispositif selon la revendication 6, dans lequel le processeur (204, 304) comprend au moins un élément choisi entre un microprocesseur et une unité centrale de traitement.

12. Dispositif selon la revendication 11, comprenant en outre une interface de communication rapprochée (NFC = Near Field Communications), telle que l'interface NFC permette au dispositif de fonctionner dans au moins l'un des modes comprenant un mode d'émulation de carte, un mode de lecture et un mode pair à pair.

13. Dispositif selon la revendication 11, comprenant en outre une interface Bluetooth.
